# DEMANDE DE BREVET EUROPEEN

(11) **EP 2 816 691 A1**
(43) Date de publication de la demande: **24.12.2014**
(21) Numéro de dépôt: 14169697.1
(22) Date de dépôt: 23.05.2014
(51) Int. Cl.: H02G 3/32

(54) **Dispositif amélioré de maintien d'au moins un élément longitudinal, de type faisceau de câbles ou tube sur un support**

(30) Priorité: 28.05.2013 FR 1354794
(71) Demandeur: Amphenol Air LB, 08110 Blagny (FR)
(72) Inventeur: Devouge, Laurent, 08370 Margut (FR)
(74) Mandataire: Casalonga

(57) **Abrégé**

Ce dispositif de maintien d'au moins un élément longitudinal de type faisceau de câbles ou tube sur un support comprend un collier (2) déformable susceptible d'adopter une position ouverte permettant l'insertion de l'élément longitudinal et des moyens de serrage (10, 11) de l'élément longitudinal dans le collier et de fixation du dispositif sur le support.

Le collier comporte des moyens (17, 18) libérables de blocage provisoire du collier dans une position fermée de maintien de l'élément longitudinal.

## Description

L'invention concerne, de manière générale, les colliers de câblage et se rapporte plus particulièrement à un dispositif de maintien d'un faisceau de câbles ou d'un tube sur un support.

Une application particulièrement intéressante d'un tel dispositif concerne le maintien d'un faisceau de câbles ou d'un tube sur la structure interne d'un aéronef ou dans tout autre domaine industriel.

Mais l'invention se rapporte, de manière générale, à la fixation d'un faisceau d'éléments longitudinaux ou d'un tube sur une structure.

Comme on le sait, dans le domaine du câblage pour l'aéronautique, un grand nombre de colliers sont susceptibles d'être utilisés pour le maintien de l'ensemble des faisceaux de câbles du réseau de bord d'un aéronef. Les gains en poids étant l'une des préoccupations constantes qui s'imposent aux équipementiers intervenant dans le domaine de l'aéronautique, cette exigence s'impose également dans le domaine des équipements de câblage et, en particulier, en ce qui concerne les colliers de maintien de faisceau de câbles.

Dans l'état de la technique, les dispositifs de maintien de faisceaux de câbles étaient réalisés à partir d'un collier métallique réalisé à partir d'une patte recourbée en forme d'arc de cercle et entourée d'un fourreau de silicone.

La réalisation du collier à partir d'une patte métallique, bien qu'avantageuse en terme de flexibilité, présentait un inconvénient majeur en raison de son poids.

Il a en outre été constaté que le fourreau de silicone avait tendance à glisser le long du collier et ou à se déchausser transversalement ce qui, d'une part, le rendait moins efficace, en ce qui concerne sa fonction de maintien de câbles et, d'autre part, était susceptible, à la longue, d'altérer le faisceau de câbles.

Il a été proposé de pallier cet inconvénient et d'utiliser un collier de maintien de faisceau de câbles revêtu d'une couche protectrice surmoulée le long de la face interne du collier, comportant du silicone. On pourra à cet égard se référer au document FR 2 969 274 qui décrit un tel collier.

Le but de l'invention est de proposer un dispositif de maintien de câble dont l'usage est facilité et qui, notamment, puisse être positionné autour d'un faisceau de câbles avant la fixation proprement dite sur le support.

L'invention a donc pour objet un dispositif de maintien d'au moins un élément longitudinal de type faisceau de câbles ou tube sur un support, comprenant un collier déformable susceptible d'adopter une position ouverte permettant l'insertion de l'élément longitudinal, et des moyens de serrage de l'élément longitudinal dans le collier et de fixation du dispositif sur le support.

Le collier comporte en outre des moyens libérables de blocage provisoire du collier dans une position fermée de maintien de l'élément longitudinal.

Il a été constaté que prévoir de tels moyens libérables de blocage provisoire du collier dans la position fermée permettait de positionner de manière relativement lâche des colliers sur un élément longitudinal avant l'étape de serrage proprement dite de fixation des colliers sur le support, ce qui facilite considérablement leur montage.

Selon une autre caractéristique du dispositif de maintien selon l'invention, le collier comporte une bande de matériau élastiquement déformable susceptible d'adopter des positions instables ouverte et fermée et une position intermédiaire instable.

On peut ainsi prévoir que les moyens libérables de blocage provisoire du collier comprennent une dent prévue à une première zone d'extrémité de ladite bande et sur laquelle vient s'appuyer une deuxième zone d'extrémité de la bande.

Ainsi, dans la position de blocage provisoire du collier en position fermée, la dent vient en appui et est sollicitée contre la zone d'extrémité de la bande. En exerçant un effort sur cette zone d'extrémité, il est ainsi possible de libérer aisément ces moyens de blocage pour, par exemple, corriger le montage du collier sur un faisceau de câbles.

Dans un mode de réalisation, la dent comporte un ergot recourbé d'extrémité s'étendant parallèlement au plan général du collier et s'engageant dans un logement correspondant prévu dans la deuxième zone d'extrémité de la bande.

Ainsi, dans ce cas, la libération des moyens libérables de blocage s'effectue en exerçant un effort dirigé dans le plan général du collier, suivi d'un dégagement relatif latéral des zones d'extrémité du collier.

Dans un mode de réalisation, les moyens de serrage et de fixation du dispositif sont agencés aux extrémités mutuellement opposées du collier qui comportent chacune une patte pourvue d'un trou.

Le collier peut être réalisé en matière thermoplastique, une couche protectrice étant surmoulée sur le collier.

Avantageusement, la couche de matière protectrice comporte du silicone et s'étend le long de la face interne du collier.

Le collier peut quant à lui être par exemple réalisé en polyétherétherkétone.

Avantageusement, la couche protectrice est nervurée.

On peut enfin prévoir que le collier comporte au niveau de l'organe de serrage et de fixation du dispositif, une épaisseur accrue et des évidements localisés au niveau de ladite zone de fixation.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1 illustre une vue en perspective d'un dispositif de maintien d'un faisceau de câbles selon l'invention ;
- la figure 2 montre le dispositif de la figure 1 dans la position de blocage provisoire du collier en position fermée ;
- les figures 3, 4, 5, 6 et 7 sont des schémas illustrant l'utilisation d'un dispositif selon l'invention ;
- les figures 8 et 9 illustrent un autre mode de réalisation d'un dispositif de maintien d'au moins un élément longitudinal selon l'invention ; et
- les figures 10, 11 et 12 illustrent l'utilisation du dispositif des figures 8 et 9.

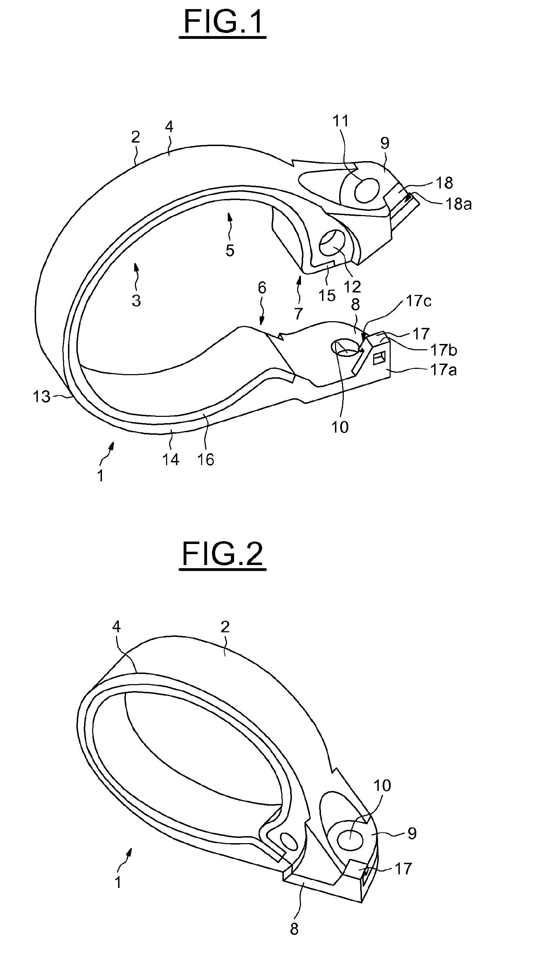

On va tout d'abord décrire un premier exemple de réalisation d'un dispositif de maintien d'au moins un élément longitudinal selon l'invention en référence aux figures 1 à 7.

Dans l'exemple de réalisation illustré sur ces figures, le dispositif, désigné par la référence numérique générale 1, est ici destiné au maintien d'un toron de câbles sur la structure interne d'un aéronef. Mais on ne sort pas du cadre de l'invention lorsqu'il est destiné à la fixation de tout autre type d'éléments longitudinaux, en particulier dans le domaine industriel.

Comme on le voit, ce dispositif 1 est essentiellement constitué d'un collier 2 comprenant une bande B de matière élastiquement déformable et comprenant une zone 3 partiellement annulaire, c'est-à-dire ouverte, ayant une surface externe 4 convexe et une surface interne 5 concave assurant le maintien proprement dit du faisceau de câbles. Les extrémités en regard 6 et 7 de la zone annulaire 3 sont dotées de moyens de serrage du faisceau de câbles et de fixation du collier sur un support (non représenté sur la figure 1). Les extrémités 6 et 7 se prolongent ainsi par des pattes 8 et 9 pourvues chacune d'un trou 10 et 11 destiné à recevoir une vis de fixation et de serrage.

On notera que le collier 2 est réalisé en une seule pièce en matière thermoplastique injectée, par exemple en polyétherétherkétone, également connue sous le terme de *« PEEK ».* Un tel matériau thermoplastique présente un poids relativement faible, en comparaison des matériaux de type aluminium ou inox utilisés selon l'état de la technique. Il est en outre capable de se déformer aisément pour revenir dans sa position initiale, tel que visible sur la figure 1.

Le collier 2 est ainsi capable de se déformer entre une position ouverte, permettant l'insertion de câbles et une position fermée de maintien des câbles sur la structure. On notera que, de préférence, grâce à la réalisation du collier en Peek, celui-ci peut adopter une position totalement ouverte, sensiblement à plat, permettant un positionnement aisé du toron, tout en revenant à sa position d'origine illustrée sur la figure 1. En choisissant un collier de dimensions appropriées, dans cette position, le toron peut être maintenu avant fermeture du collier, grâce à un effort élastique qui s'exerce alors sur le toron. Mais, comme cela sera détaillé par la suite, on utilisera avantageusement des moyens de blocage provisoire du collier dans une position fermée de maintien du toron.

Le collier peut alors être fermé soit en appliquant les pattes d'extrémité l'une sur l'autre et en les fixant sur la structure, par exemple à l'aide d'une vis, soit en utilisant un autre système de fixation.

On notera à cet égard que l'une des pattes, à savoir la patte désignée par la référence 8, s'étend latéralement par rapport à l'extrémité correspondante de la partie annulaire tandis que l'autre patte, à savoir la patte référencée 9 s'étend dans le prolongement de l'extrémité opposée de la partie annulaire de sorte que en position fermée du collier les deux pattes viennent s'emboiter l'une contre l'autre.

Pour parfaire l'assemblage et augmenter la rigidité du collier, dans la zone de jonction entre la partie annulaire et les pattes d'extrémité, le collier présente une épaisseur accrue pour éviter tout risque de pincement d'un câble du toron entre les pattes d'extrémité 8 et 9, lors de la fermeture du dispositif. On prévoira toutefois des évidements, tels que 12, localisés dans cette zone de jonction afin de diminuer le poids de l'ensemble.

Le dispositif 1 est encore pourvu d'une couche protectrice 14 recouvrant la face concave du collier 2 et s'étendant le long d'une partie substantielle des pattes d'extrémité 8 et 9, par exemple jusqu'aux trous 10 et 11.

On prévoira ainsi, par exemple, une empreinte 15 le long de la face du collier destiné à recevoir cette couche protectrice.

Alors que le collier 2 est réalisé en matériau thermoplastique, la couche protectrice 14 est quant à elle réalisée en silicone. Par silicone, on entend ici un polymère siliconé. L'emploi du silicone permet, grâce à ses propriétés élastiques un maintien efficace du toron. En outre, la présence de cette couche de silicone au niveau des pattes permet d'éviter tout risque d'altération des câbles en cas de pincement lors de la fermeture du dispositif.

Afin d'obtenir une bonne cohésion entre le silicone et le collier 2, la couche protectrice siliconée est réalisée par surmoulage permettant d'éviter tout risque de déchaussement de la couche protectrice.

Il a été constaté que l'emploi combiné d'un collier réalisé en matériau thermoplastique et d'une couche protectrice surmoulée en silicone permettait d'obtenir un gain en poids relativement important de l'ordre de 50% par rapport à l'état de la technique. Il a en effet été constaté qu'un collier destiné au maintien d'un faisceau de câbles de diamètre de 42 mm présentait un poids de l'ordre de 10,5 g.

On notera enfin que dans le but de faciliter le maintien du faisceau de câbles sans le bloquer, on prévoira des nervures longitudinales, telles 16, prévues dans la couche protectrice 14 lors du surmoulage.

On notera par ailleurs que, comme indiqué précédemment, le collier 2 est réalisé en un matériau élastiquement déformable capable d'adopter une position stable, partiellement ouverte, visible sur la figure 1, et des positions ouverte et fermée, instables.

Le dispositif est par ailleurs doté de moyens libérables de blocage provisoire du collier dans une position fermée de maintien du faisceau de câble.

Il s'agit en particulier de permettre de bloquer de manière provisoire le collier dans une position de maintien d'un faisceau de câbles et dans laquelle les trous 10 et 11 s'étendent de manière sensiblement coaxiale de manière à permettre l'insertion aisée d'une vis de fixation et de serrage du dispositif.

Comme on le voit sur la figure 1, ces moyens de blocage sont réalisés par une patte 17 formant une dent prévue à l'une des extrémités du collier sur laquelle est destinée à venir en appui l'extrémité opposée du collier dans la position fermée de maintien du faisceau de câbles.

Plus particulièrement, l'extrémité du collier opposée à la dent 17 comporte une empreinte 18 destinée à recevoir la dent 17.

Comme on le voit, la dent 17 a une forme générale de L et comporte une première branche 17a dressée à partir de la patte d'extrémité 8 et une branche 17b s'étendant perpendiculairement à la première branche 17a.

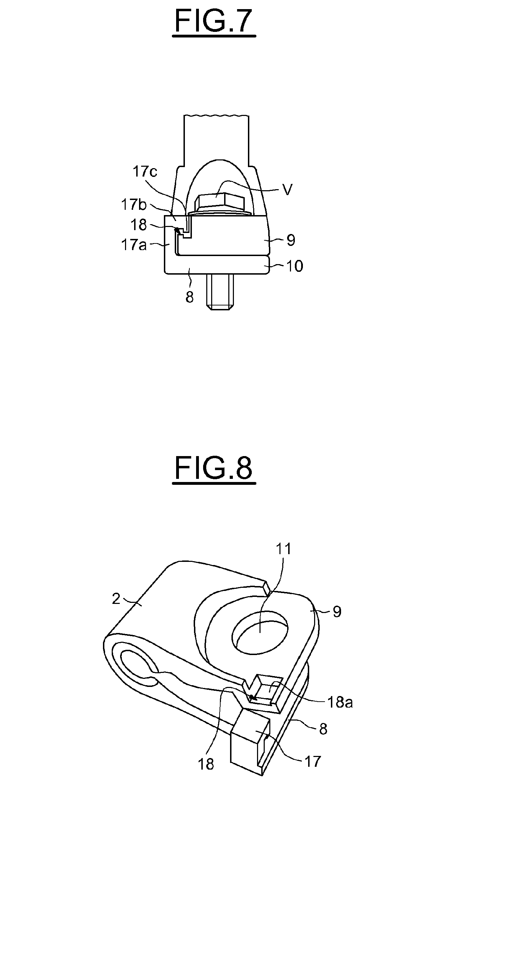

On prévoira avantageusement de doter la deuxième branche 17b d'un ergot recourbé 17c qui s'étend parallèlement à la première branche 17a et qui vient se loger dans un logement correspondant 18a de l'empreinte prévu dans l'extrémité opposée du collier 2 (figure 8).

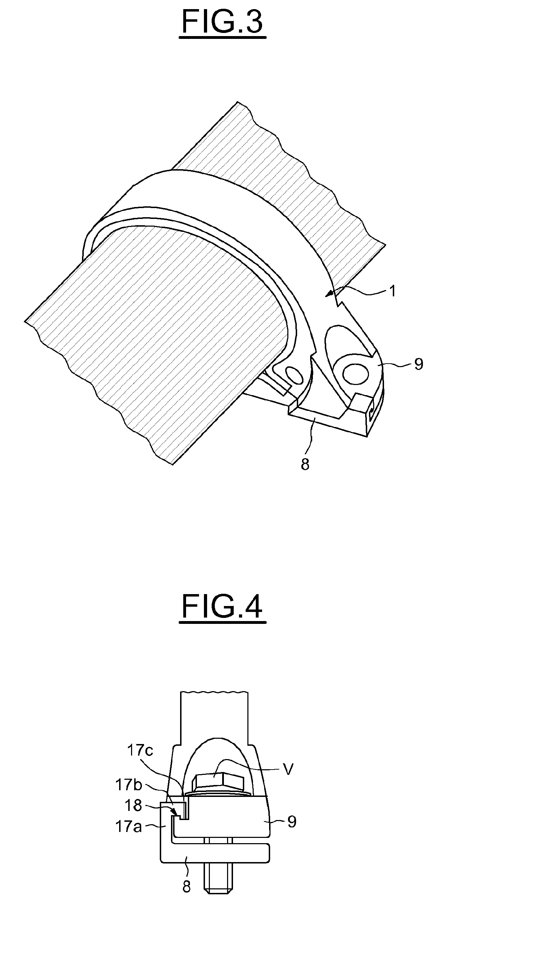

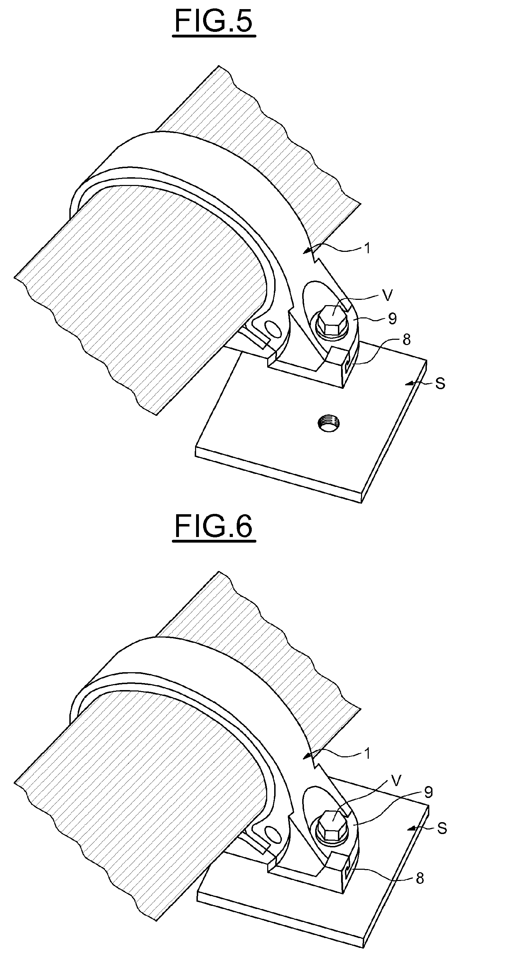

Ainsi, en se référant à la figure 2, à partir de la position représentée à la figure 1, il est possible, en rapprochant les pattes 8 et 9 et en engageant la dent 17 dans le logement 18, de procéder à un verrouillage provisoire du dispositif 1 sur un faisceau de câbles (figures 2 et 3). Comme indiqué précédemment, dans cette position, les trous 10 et 11 sont alignés de sorte qu'il est aisément possible d'insérer une vis V associée le cas échéant à une rondelle (figures 4 et 5) pour, par la suite, procéder au serrage et au vissage du dispositif sur un support S (figure 6).

On notera néanmoins que, dans la position de blocage provisoire, il reste possible de procéder à un ajustement de la position du dispositif sur le toron, voire, le cas échéant, d'ouvrir le collier en dégageant la dent 17 du logement 18.

On notera néanmoins que lorsque la dent 17 comporte un ergot recourbé 17c, comme décrit précédemment, le dégagement s'effectue, d'une part, en exerçant un effort sur les pattes (figure 7), puis en dégagent latéralement les pattes 8 et 9 de manière à libérer la dent 17.

On notera que l'invention n'est pas limitée aux modes de réalisation décrits précédemment, le dispositif comprenant le collier doté des moyens de serrage et de fixation du dispositif sur le support et des moyens libérables de blocage provisoire du collier pouvant adopter diverses configurations.

En effet, comme visible sur les figures 8, 9, 10, 11 et 12, le dispositif peut comporter un collier de dimensions appropriées au nombre de câbles du faisceau à positionner par rapport à un support.

Comme on le voit sur ces figures, sur lesquelles des éléments identiques aux figures 1 à 7 comportent les mêmes références numériques, on voit que le dispositif comporte également des pattes 8 et 9 dotées de trous 10 et 11 ainsi qu'une dent 17 s'engageant dans un logement 18.

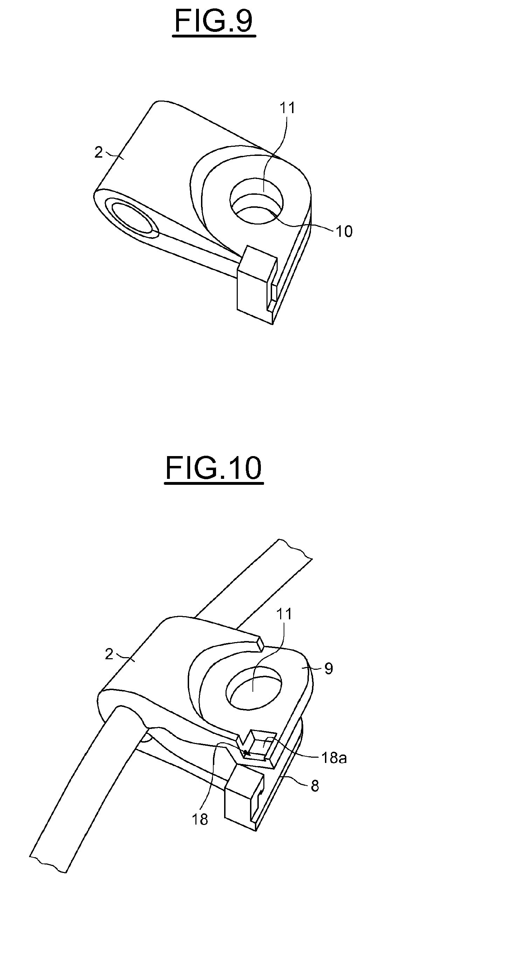

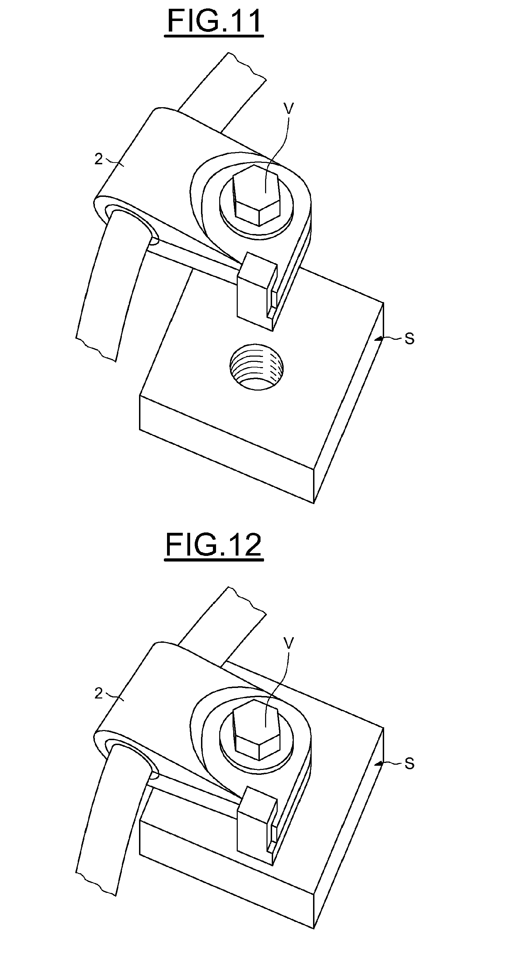

Comme indiqué précédemment, ce dispositif s'utilise en insérant un faisceau de câbles dans le collier (figure 10) puis en bloquant de manière provisoire le collier dans une position fermée de maintien des câbles en engageant la dent 17 dans le logement 18 (figure 11). Dans cette position, une vis V peut être insérée dans les trous 10 et 11 pour serrer et fixer le dispositif sur un support S.

## Revendications

1. Dispositif de maintien d'au moins un élément longitudinal de type faisceau de câbles ou tube sur un support, comprenant un collier (2) déformable susceptible d'adopter une position ouverte permettant l'insertion de l'élément longitudinal et des moyens (10, 11) de serrage de l'élément longitudinal dans le collier et de fixation du dispositif sur le support, **caractérisé en ce que** le collier (2) comporte des moyens (17, 18) libérables de blocage provisoire du collier dans une position fermée de maintien de l'élément longitudinal.

2. Dispositif selon la revendication 1, **caractérisé en ce que** le collier comporte une bande (B) de matériau élastiquement déformable susceptible d'adopter des positions instables ouverte et fermée et une position intermédiaire instable.

3. Dispositif selon la revendication 2, **caractérisé en ce que** les moyens libérables de blocage provisoire du collier comprennent une dent (17) prévue à une première zone d'extrémité de ladite bande et sur laquelle vient s'appuyer une deuxième zone d'extrémité de la bande.

4. Dispositif selon la revendication 3, **caractérisé en ce que** la dent (17) comporte un ergot (17c) recourbé d'extrémité s'étendant parallèlement au plan général du collier et s'engageant dans un logement (18) correspondant prévu dans le deuxième zone d'extrémité de la bande.

5. Dispositif selon l'une quelconque des revendications 1 à 4, **caractérisé en ce que** les moyens de serrage et de fixation du dispositif sont agencés aux extrémités mutuellement opposées du collier qui comportent chacune une patte (8, 9) pourvue d'un trou (10, 11).

6. Dispositif selon l'une quelconque des revendications 1 à 5, **caractérisé en ce que** le collier est réalisé en matière thermoplastique, une couche protectrice étant surmoulée sur le collier.

7. Dispositif selon la revendication 6, **caractérisé en ce que** la couche de matière protectrice comporte du silicone et s'étend le long de la face interne du collier.

8. Dispositif selon l'une des revendications 6 et 7, **caractérisé en ce que** le collier est réalisé en polyétherétherkétone.

9. Dispositif selon l'une quelconque des revendications 6 à 8, **caractérisé en ce que** la couche protectrice est nervurée.

10. Dispositif selon l'une quelconque des revendications 1 à 9, **caractérisé en ce que** le collier comporte, au niveau de l'organe de serrage et de fixation du dispositif, une épaisseur accrue et des évidements (12) localisés au niveau de ladite zone de jonction.
